# EUROPÄISCHE PATENTANMELDUNG

(11) **EP 1 884 846 A1**
(43) Veröffentlichungstag der Anmeldung: **06.02.2008**
(21) Anmeldenummer: 06016046.2
(22) Anmeldetag: 01.08.2006
(51) Int. Cl.: G05B 19/042

(54) **System und Verfahren zur Anzeige eines Variablenstatus**

(71) Anmelder: SIEMENS AKTIENGESELLSCHAFT, 80333 München (DE)
(72) Erfinder: Heise, Oliver, 92318 Neumarkt (DE); Jany, Bernhard, 90530 Wendelstein (DE); Opaterny, Thilo, 90453 Nürnberg (DE); Schulz, Dietmar, 90574 Rosstal (DE)

(57) **Zusammenfassung**

System zur Anzeige von Statuswerten (1) für Variablen (2), wobei die Variablen zur Verwendung durch einen oder mehrere Bausteine (3), insbesondere Bausteine, die Komponenten eines Automatisierungssystems repräsentieren, vorgesehen sind, mit mindestens einer Verwendungsstellenanzeige (4), die zur Angabe der die Variablen verwendenden Bausteine vorgesehen ist, Auswahlmitteln zur Auswahl mindestens einer Variable aus der Verwendungsstellenanzeige durch einen Benutzer des Systems und Anzeigemitteln (5) zur Anzeige der Statuswerte, die die mindestens eine Variable in den sie verwendenden Bausteinen annimmt.

## Beschreibung

Die Erfindung betrifft ein System und ein Verfahren zur Anzeige von Statuswerten für Variablen, wobei die Variablen zur Verwendung durch einen oder mehrere Bausteine vorgesehen sind.

Im Rahmen des Engineering einer Automatisierungslösung werden für bestimmte Funktionen des Engineering-Systems spezielle Bausteine verwendet. Hierbei werden die Bausteine durch Code im Engineering-System repräsentiert. Die Bausteine verwenden verschiedene Variablen, wobei die Variablen unterschiedliche Statuswerte annehmen können. Hierbei kann eine Variable von mehreren Bausteinen verwendet werden und im Zeitverlauf innerhalb der verschiedenen Bausteine an den Stellen, an denen sie verwendet wird, unterschiedliche Werte annehmen.

Im Rahmen des Engineering ist es ausgesprochen schwierig, im Bausteinstatus eines einzelnen Bausteins zu erkennen, welche weiteren Bausteine nun eine bestimmte Variable mit welchen Werten beschreiben bzw. lesen. Heutzutage werden so genannte Verwendungsstellen verwendet, um anzuzeigen, wo eine bestimmte Variable lesend oder schreibend verwendet wird. Diese Information wird jedoch nur statisch dargestellt. Die Verwendungsstellen werden hierbei tabellarisch für den Benutzer des Engineering-Systems aufgezeigt. Dem Benutzer des Systems wird jedoch nicht angezeigt, welche Werte die entsprechenden Variablen an den verwendeten Stellen annehmen.

Die Aufgabe der vorliegenden Erfindung besteht daher darin, dem Benutzer die aktuelle Anzeige von Statuswerten von Variablen zu ermöglichen.

Die Aufgabe wird erfindungsgemäß gelöst durch ein System zur Anzeige von Statuswerten von Variablen, wobei die Variablen zur Verwendung durch einen oder mehrere Bausteine, insbesondere Bausteine, die Komponenten eines Automatisierungssystems repräsentieren, vorgesehen sind, mit mindestens einer Verwendungsstellenanzeige, die zur Angabe der die Variablen verwendenden Bausteine vorgesehen ist, Auswahlmitteln zur Auswahl mindestens einer Variable aus der Verwendungsstellenanzeige durch einen Benutzer des Systems und Anzeigemitteln zur Anzeige der Statuswerte, die die mindestens eine Variable in den sie verwendenden Bausteinen annimmt.

Die Aufgabe wird weiterhin gelöst durch ein Verfahren zur Anzeige von Statuswerten für Variablen, wobei die Variablen durch einen oder mehrere Bausteine, insbesondere Bausteine, die Komponenten eines Automatisierungssystems repräsentieren, verwendet werden, bei dem die die Variablen verwendenden Bausteine durch mindestens eine Verwendungsstellenanzeige angegeben werden, mindestens eine Variable aus der Verwendungsstellenanzeige durch einen Benutzer des Systems ausgewählt wird und die Statuswerte, die die mindestens eine Variable in den sie verwendenden Bausteinen annimmt, angezeigt werden.

Der Erfindung liegt die Erkenntnis zugrunde, dass es für einen Projekteur bzw. Engineer von großem Vorteil ist, wenn er die Statuswerte, die eine Variable in den verschiedenen Bausteinen, die sie verwenden, annimmt, anzeigen lassen kann. Dadurch wird dem Anwender die Entwicklung einer bestimmten Variable im Zeitverlauf verdeutlicht.

In bisher verwendeten Systemen musste der Anwender sich die Information über den aktuellen Variablenstatus und die Entwicklung von bestimmten Variablen aufwändig mit Hilfe von break points, die die Dynamik stören oder mit Hilfe von statistischen Analysen beschaffen.

Mit dem erfindungsgemäßen System und Verfahren können die aktuellen Statuswerte der Variablen dem Anwender jedoch auf einfache Weise zur Verfügung gestellt werden. Hierbei werden durch den Anwender bestimmte Variablen ausgewählt, für die er die Statuswerte dargestellt haben möchte. Die Stellen, an denen die Variablen in den Bausteinen, durch die sie verwendet werden, vorkommen, werden ermittelt. Hierbei kann der Anwender eine oder mehrere Variablen auswählen, für die er die aktuellen Statuswerte dargestellt haben möchte. Die Werte werden dann an sämtlichen Verwendungsstellen der entsprechenden Variable dargestellt.

Hierbei können die Statuswerte entweder direkt in der Verwendungsstellenanzeige, über die der Anwender die Variablen auch ausgewählt hat, angezeigt werden; sie können jedoch auch in eine eigenständige Tabelle geschrieben und dort angezeigt werden.

Die Dynamik der Werte der Variablen wird in dem erfindungsgemäßen System mit Hilfe von Code-Triggern ermittelt. Die Code-Trigger melden, wenn eine bestimmte Codeadresse ausgeführt wird. Die Änderung eines Wertes wird dann durch ein Programmiergerät erkannt, indem die Werte an den verschiedenen Codeadressen miteinander verglichen werden. Auf diese Weise wird die Änderung des Variablenstatus bzw. der Statuswerte der ausgewählten Variable erkannt. Ändert sich eine entsprechende Variable an einer Stelle, an der sie verwendet wird, so wird der aktuelle Wert in die entsprechende Anzeige für den aktuellen Variablenstatus eingetragen. Damit ist der Anwender des Systems immer mit aktuellen Statuswerten für die entsprechenden Variablen dynamisch versorgt. Er muss nicht an die einzelnen Verwendungsstellen springen und dort selbst nach den aktuellen Variablenwerten recherchieren.

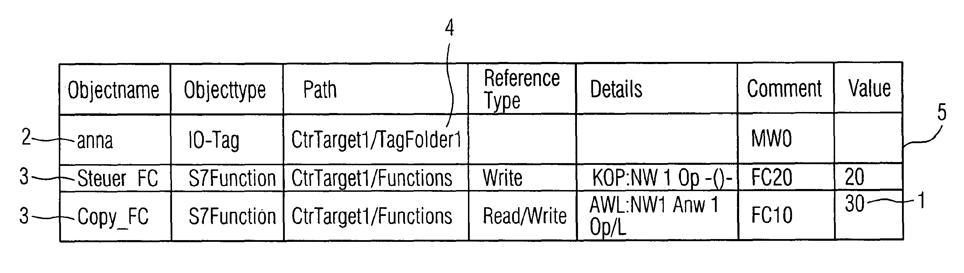

Im Folgenden wird die Erfindung anhand der Figur näher erläutert:
Die Figur zeigt das System zur Anzeige von Statuswerten 1 für Variablen 2. Hierbei werden bestimmte Variablen 2 in mehreren Bausteinen 3 des Automatisierungssystems verwendet. Die entsprechenden Verwendungsstellen der Variablen 2 in den Bausteinen 3 werden mittels einer Verwendungsstellenanzeige 4 angegeben. Des Weiteren verfügt das System über Anzeigemittel 5 zur Anzeige der Statuswerte 1, die die Variablen an den Stellen, an denen sie verwendet werden, aktuell annehmen.

Im vorliegenden Beispiel ist die Variable "Anna" in der Tabelle mit ihren Verwendungsstellen angegeben und in der letzten Spalte sind über die Anzeigemittel 5 die entsprechenden Statuswerte 1 der ausgewählten Variable dargestellt.

## Patentansprüche

1. System zur Anzeige von Statuswerten (1) für Variablen (2), wobei die Variablen zur Verwendung durch einen oder mehrere Bausteine (3), insbesondere Bausteine, die Komponenten eines Automatisierungssystems repräsentieren, vorgesehen sind, mit
• mindestens einer Verwendungsstellenanzeige (4), die zur Angabe der die Variablen verwendenden Bausteine vorgesehen ist,
• Auswahlmitteln zur Auswahl mindestens einer Variable aus der Verwendungsstellenanzeige durch einen Benutzer des Systems und
• Anzeigemitteln (5) zur Anzeige der Statuswerte, die die mindestens eine Variable in den sie verwendenden Bausteinen annimmt .

2. System nach Anspruch 1, bei dem die Verwendungsstellenanzeige zur Anzeige der Statuswerte der ausgewählten Variable vorgesehen ist.

3. System nach Anspruch 1, bei dem die Anzeigemittel zur Anzeige der Statuswerte der ausgewählten Variable als eigenständige Tabelle ausgebildet sind.

4. System nach einem der Ansprüche 1 bis 3, bei dem die Auswahlmittel als Selektionsfunktion und/oder als Mehrfachselektionsfunktion ausgebildet sind.

5. System nach einem der vorhergehenden Ansprüche, bei dem mehrere Code Trigger zur Ermittlung der Statuswerte der ausgewählten Variable an durch die Code-Trigger adressierten Codeadressen vorgesehen sind.

6. Verfahren zur Anzeige von Statuswerten für Variablen, wobei die Variablen durch einen oder mehrere Bausteine, insbesondere Bausteine, die Komponenten eines Automatisierungssystems repräsentieren, verwendet werden, bei dem
• die die Variablen verwendenden Bausteine durch mindestens eine Verwendungsstellenanzeige angegeben werden,
• mindestens eine Variable aus der Verwendungsstellenanzeige durch einen Benutzer des Systems ausgewählt wird und
• die Statuswerte, die die mindestens eine Variable in den sie verwendenden Bausteinen annimmt, angezeigt werden.

7. Verfahren nach Anspruch 6, bei dem die Statuswerte der ausgewählten Variable durch die Verwendungsstellenanzeige angezeigt werden.

8. Verfahren nach Anspruch 6, bei dem die Statuswerte der ausgewählten Variable durch eine eigenständige Tabelle angezeigt werden.

9. Verfahren nach einem der Ansprüche 6 bis 8, bei dem die Variablen für die Anzeige der Statuswerte mithilfe einer Selektionsfunktion und/oder einer Mehrfachselektionsfunktion ausgewählt werden.

10. Verfahren nach einem der Ansprüche 6 bis 9, bei dem die Statuswerte der ausgewählten Variable aus dem Code der die Variable verwendenden Bausteine mithilfe mindestens eines Code Triggers ermittelt werden.
